# EUROPÄISCHE PATENTSCHRIFT

(11) **EP 2 695 544 B1**
(45) Veröffentlichungstag und Bekanntmachung des Hinweises auf die Patenterteilung: **13.05.2015**
(21) Anmeldenummer: 13179416.6
(22) Anmeldetag: 06.08.2013
(51) Int. Cl.: A47C 7/02, A47G 9/10, H02G 3/08

(54) **Kissen mit Steckdoseneinheit**
Cushion with socket outlet unit
Coussin avec unité de prise

(30) Priorität: 07.08.2012 DE 102012213964
(43) Veröffentlichungstag der Anmeldung: 12.02.2014
(73) Patentinhaber: A. & H. Meyer GmbH Leuchten und Büroelektrik, 32694 Dörentrup (DE)
(72) Erfinder: Meyer, Horst, 32694 Dörentrup (DE)
(74) Vertreter: Von Kreisler Selting Werner - Partnerschaft von Patentanwälten und Rechtsanwälten mbB

(56) Entgegenhaltungen:
- EP-A2- 0 498 175
- DE-U1- 9 011 698

## Beschreibung

Durch die Möglichkeit, mobile elektronische Geräte zu verwenden, ist der Bedarf an Steckdosen zur Stromversorgung aber auch für Datenverbindungen in Räumen enorm gewachsen. Daher wird versucht, Steckdosen für Strom- oder Datenversorgung möglichst in einem Bereich anzuordnen, in dem der Benutzer der elektronischen Geräte diese üblicherweise benutzt. Es ist beispielsweise bekannt, Steckdoseneinheiten in Möbel, wie beispielsweise Tische, zu integrieren. Dadurch erhält der Benutzer die Möglichkeit, das elektronische Gerät bequem am Tisch sitzend zu nutzen, wobei gleichzeitig auf eine einfache Art und Weise für eine Strom- oder Datenverbindung gesorgt ist. Die DE 9011698 U zeigt ein Möbelstück, welches dem der vorliegenden Erfindung ähnlich ist.

Möbel haben nicht nur einen Nutzungswert, sondern stellen auch Designobjekte dar, so dass stets danach gestrebt wird, in Möbel integrierte Steckdoseneinheiten möglichst formschön oder unauffällig zu gestalten.

Nachteilig bei den fest in Möbel integrierten Steckdoseneinheiten ist jedoch, dass diese durch den festen Einbau an einem Ort festgelegt sind und somit ein flexibler Einsatz nicht möglich ist.

Es ist daher die Aufgabe der vorliegenden Erfindung, eine in Verbindung mit einem Möbelstück flexibel einsetzbare Steckdoseneinheit zu schaffen, die möglichst unauffällig oder optisch ansprechend mit einem Möbelstück kombiniert werden kann.

Die Erfindung ist definiert durch die Merkmale des Anspruchs 1.

Erfindungsgemäß ist ein Kissen mit einer Polstereinlage und einem Bezug vorgesehen, bei dem die Polstereinlage eine Aussparung aufweist, in die eine Steckdosenvorrichtung, die aus einer Steckdoseneinheit mit mindestens einer Steckdose und mindestens einem Kabel besteht, eingesetzt ist, wobei der Bezug eine erste Öffnung aufweist, deren Umfangskanten um die mindestens eine Steckdose angeordnet und an der Steckdosenvorrichtung befestigt sind und dass der Bezug eine zweite Öffnung aufweist, die eine Durchführungsöffnung für das Kabel bildet.

Die Erfindung sieht somit die Kombination eines Kissen mit einer Steckdoseneinheit vor, so dass die Steckdoseneinheit in vorteilhafter Weise mit einem Möbelstück, beispielsweise mit einem Polstermöbel oder einem anderen Sitzmöbel, kombiniert werden kann.

Durch das Kabel ist das Kissen mit der Steckdoseneinheit flexibel einsetzbar, da es ortsveränderlich angeordnet werden kann. Durch die Integration der Steckdoseneinheit in dem Kissen kann die Steckdoseneinheit unauffällig mit einem Möbel kombiniert werden, da das Kissen als zu dem Möbelstück dazugehörig angesehen wird. Dadurch, dass der Bezug eine erste Öffnung aufweist, deren Umfangskanten um die mindestens eine Steckdose angeordnet sind, kann das Kissen optisch ansprechend gestaltet werden, da ein sauberer Übergang zwischen dem Bezug und der von außen zugänglichen Steckdoseneinheit geschaffen ist.

Vorzugsweise ist vorgesehen, dass die Polstereinlage eine Schaumstoffeinlage ist. Über die Schaumstoffeinlage lassen sich vorteilhafterweise unterschiedliche Formen von Kissen erzeugen, wobei gleichzeitig die Schaumstoffeinlage eine für den Benutzer angenehme Polsterung bereitstellt.

In einem bevorzugten Ausführungsbeispiel der Erfindung ist vorgesehen, dass die Polstereinlage eine zweite Aussparung für das Kabel aufweist. Beispielsweise kann in der Polstereinlage ein Kanal für das Kabel vorgesehen sein, der beispielsweise das Kabel von der Steckdoseneinheit zu einer abgewandten Seite der Polstereinlage führt. Durch das Vorsehen einer Aussparung für das Kabel wird gewährleistet, dass bei der Nutzung des erfindungsgemäßen Kissens die Polsterwirkung des Kissens durch das Kabel nur geringfügig beeinflusst wird. Mit anderen Worten: Der Benutzer spürt das Kabel bei der Benutzung des Kissens nahezu nicht.

In einem Ausführungsbeispiel der Erfindung ist vorgesehen, dass die Steckdosenvorrichtung einen Rahmen aufweist, an dem der Bezug befestigt ist. Der Rahmen kann beispielsweise aus Holz oder Kunststoff gefertigt sein. Der Rahmen bietet eine vorteilhafte Möglichkeit, den Bezug auf einfache Art und Weise an der Steckdosenvorrichtung zu befestigen.

Der Rahmen, an dem der Bezug befestigt ist, ermöglicht darüber hinaus eine sehr einfache Fertigung und einen sehr flexiblen Einsatz des erfindungsgemäßen Kissens. Beispielsweise ist es möglich, das Kissen ohne die Steckdoseneinheit vorzufertigen, bei dem der Bezug bereits an dem Rahmen befestigt ist. Die Steckdoseneinheit kann dann zu einem späteren Zeitpunkt in den Rahmen eingesetzt werden. Es können auch unterschiedliche Steckdoseneinheiten mit dem gleichen Kissen verwendet werden. So können beispielsweise Kissen vorgefertigt sein und je nach Bedarf mit den gewünschten Steckdoseneinheiten versehen werden. Das erfindungsgemäße Kissen ermöglicht auch, dass eine Steckdoseneinheit zu einem späteren Zeitpunkt ausgetauscht werden kann, wenn eine unterschiedliche Steckdosenanordnung oder Steckdosenart gewünscht wird oder wenn ein Defekt der Steckdose vorliegt. Dadurch ist das Kissen sehr flexibel einsetzbar. Die Steckdoseneinheit kann auch als vorgefertigte Einheit vorliegen, die nur noch in den Rahmen eingefügt werden muss.

Die Steckdoseneinheit kann ferner ein Gehäuse aufweisen, in das die einzelnen Steckdosen der Steckdoseneinheit eingesetzt sind. Auf diese Weise kann die Anschlusseinheit der Steckdosen elektronisch von der Polstereinlage isoliert werden und darüber hinaus gegenüber Umwelteinflüssen geschützt werden. Dadurch kann beispielsweise verhindert werden, dass Teile der Polstereinlage durch Druckeinwirkung gegen die Anschlüsse der einzelnen Steckdosen gedrückt werden.

Das Gehäuse der Steckdoseneinheit bietet darüber hinaus die Möglichkeit, dass die Steckdoseneinheit als eine Einheit in das erfindungsgemäße Kissen eingesetzt werden kann. Insbesondere, wenn das erfindungsgemäße Kissen einen Rahmen aufweist, an dem der Bezug befestigt ist, lässt sich die Steckdoseneinheit mit dem Gehäuse auf sehr einfache Art und Weise in den Rahmen einsetzen.

In einem besonders bevorzugten Ausführungsbeispiel der Erfindung ist vorgesehen, dass die Polstereinlage zweiteilig ausgebildet ist. Auf diese Weise kann die Durchführung des Kabels durch die Polstereinlage auf besonders einfache Art und Weise geschaffen werden, indem das Kabel zwischen den beiden Teilen der Polstereinlage geführt wird.

Die Erfindung kann in vorteilhafter Weise einen Abdeckrahmen vorsehen, der die Steckdoseneinheit und/oder den Rahmen abdeckt. Dadurch kann eine optisch besonders ansprechende Steckdoseneinheit geschaffen werden, wobei gleichzeitig die Befestigung des Bezuges an der Steckdoseneinheit verdeckt und somit gegen Umwelteinflüsse geschützt werden kann.

Der Abdeckrahmen kann beispielsweise lösbar an der Steckdosenvorrichtung, beispielsweise an der Steckdoseneinheit und/oder den Rahmen befestigt sein. Beispielsweise ist der Abdeckrahmen in entsprechende Aussparungen eingeclipst. Durch die lösbare Befestigung des Abdeckrahmens kann dieser zu einem späteren Zeitpunkt entfernt werden, wenn beispielsweise die Steckdoseneinheit ausgetauscht werden soll.

In einem besonders bevorzugten Ausführungsbeispiel ist vorgesehen, dass die zweite Öffnung eine an die Polstereinlage angepasste Größe aufweist, wobei die zweite Öffnung über eine Verschließeinrichtung, vorzugsweise einen Reißverschluss, bis zum Verbleib der Durchführungsöffnung verschließbar ist. Dadurch lässt sich die Polstereinlage in vorteilhafter Weise in den Bezug einführen, wobei darüber hinaus der Zugang zu der Polstereinlage und dem in der Aussparung der Polstereinlage aufgenommenen Teil der Steckdoseneinheit in vorteilhafter Weise möglich ist. Dadurch kann die Steckdoseneinheit beispielsweise auf besonders einfache Art und Weise gewartet werden.

Der Bezug kann an dem Rahmen verklebt oder vertackert sein. Auf diese Weise lässt sich der Bezug auf besonders einfache Art und Weise an dem Rahmen und somit an der Steckdoseneinheit befestigen.

Die Steckdoseneinheit kann Strom- und/oder Datensteckdosen aufweisen.

Der Bezug kann aus Leder oder einem textilen Material hergestellt sein.

In einem besonders bevorzugten Ausführungsbeispiel ist vorgesehen, dass die Polstereinlage und somit das Kissen eine Tetraederform besitzt. Auf diese Weise kann das erfindungsgemäße Kissen in vorteilhafter Weise in einer Ecke eines Polstermöbels angeordnet werden, wodurch das Kissen in optisch besonders ansprechender Weise mit dem Polstermöbel kombiniert werden kann.

Die Erfindung sieht in vorteilhafter Weise vor, dass die Steckdosenvorrichtung, insbesondere die Steckdoseneinheit und/oder das Gehäuse zumindest teilweise aus selbstverlöschendem Kunststoff hergestellt sind. Dadurch wird die Brandgefahr bei einer defekten Steckdose der Steckdoseneinheit deutlich reduziert. Das Gehäuse kann dabei die Gefahr des Übertritts eines Brandes von der Steckdoseneinheit auf die Polstereinlage deutlich verringern.

In einem bevorzugten Ausführungsbeispiel der Erfindung ist ferner vorgesehen, dass die Polstereinlage aus schwerentflammbarem Material, beispielsweise schwerentflammbarem Schaumstoff, besteht. Dadurch wird die Gefahr, dass die Polstereinlage aufgrund einer defekten Steckdoseneinheit in Brand gerät, sehr gering gehalten.

Es zeigen:
- Fig. 1: eine schematische Draufsicht auf ein erfindungsgemäßes Kissen und
- Fig. 2: eine schematische Schnittdarstellung des in Fig. 1 dargestellten Kissens.

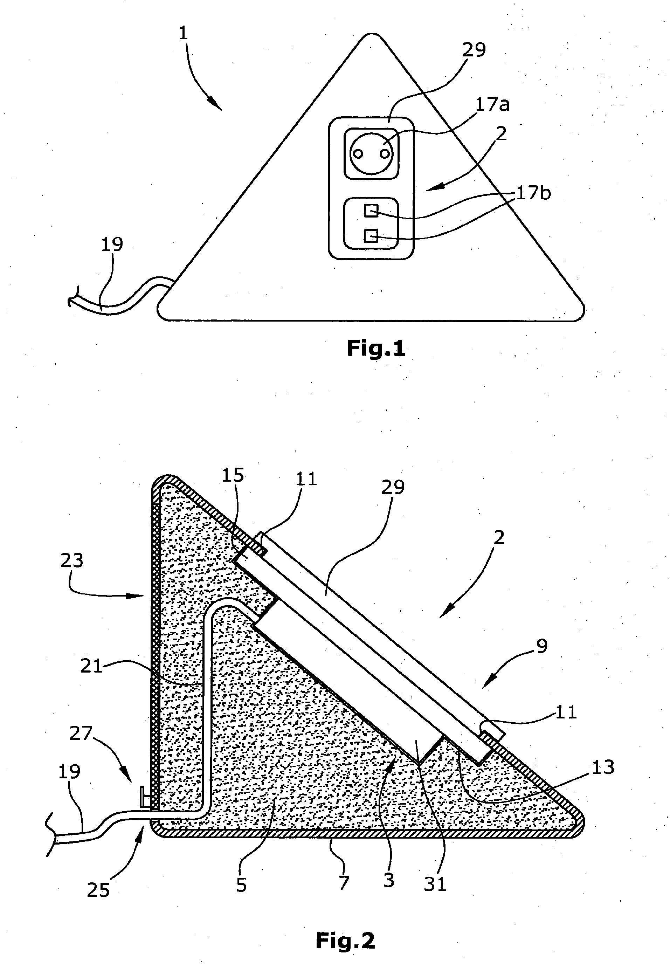

In den Fign. 1 und 2 ist das erfindungsgemäße Kissen 1 mit einer eine Steckdoseneinheit 3 aufweisenden Steckdosenvorrichtung 2 schematisch dargestellt. Das erfindungsgemäße Kissen 1 dient dazu, die Steckdoseneinheit 3 in vorteilhafter Weise mit einem nicht dargestellten Möbelstück zu kombinieren. Durch die Integration der Steckdoseneinheit 3 in das Kissen 1 ist die Steckdoseneinheit 3 ortsveränderlich und kann in vorteilhafter Weise beispielsweise mit einem Polstermöbel kombiniert werden. Durch die Integration der Steckdoseneinheit 3 in das Kissen 1 ist darüber hinaus eine optisch ansprechende Gestaltung und Kombination einer Steckdose mit einem Möbelstück bereitstellbar.

Das Kissen 1 weist eine Polstereinlage 5 auf, die beispielsweise aus einer Schaumstoffeinlage bestehen kann. Um die Polstereinlage 5 ist ein Bezug 7 angeordnet, der beispielsweise aus einem textilen Stoff oder Leder bestehen kann.

In dem Bezug 7 ist eine erste Öffnung 9 mit Umfangskanten 11 angeordnet. Die Polstereinlage 5 weist eine Aussparung 13 auf, in die die Steckdoseneinheit 3 eingesetzt ist. Die Steckdosenvorrichtung 2 weist ferner einen Rahmen 15 auf, an dem die Umfangskanten 11 der Öffnung 9 des Bezugs 7 befestigt sind. Der Rahmen 15 kann beispielsweise aus Holz oder Kunststoff bestehen, wobei die Umfangskanten 11 der Öffnung 9 des Bezuges 7 an dem Rahmen 15 vertackert oder verklebt sind.

Die Steckdoseneinheit 3 weist mehrere Steckdosen 17a,17b auf, wobei in dem in den Figuren dargestellten Ausführungsbeispiel eine Stromsteckdose 17a sowie zwei Datensteckdosen 17b zur Bereitstellung von Datenschnittstellen angeordnet sind. Die Steckdoseneinheit 3 weist ferner ein Kabel 19 auf, das die für die Steckdosen 17a,17b notwendigen Strom- bzw. Datenleitungen enthält.

Wie am besten aus Fig. 2 ersichtlich ist, wird das Kabel 19 durch eine zweite Aussparung 21 in der Polstereinlage 5 geführt, so dass das Kabel 19 auf einer von der Steckdoseneinheit 3 abgewandten Seite der Polstereinlage 5 aus dem Kissen 1 herausgeführt werden kann. Dazu weist der Bezug 7 eine zweite Öffnung 23 auf, die eine Durchführungsöffnung 25 für das Kabel 19 bildet Die Öffnung 23 ist so groß ausgebildet, dass die Polstereinlage 5 in den Bezug 7 durch die zweite Öffnung 23 eingeführt werden kann. Über eine Verschließeinrichtung 27, beispielsweise einen Reißverschluss, lässt sich die zweite Öffnung 23 bis zum Verbleib der Durchführungsöffnung 25 für das Kabel 19 verschließen.

Das erfindungsgemäße Kissen 1 weist ferner einen Abdeckrahmen 29 auf, der die Steckdoseneinheit 3 und den Rahmen 15 abdeckt, wobei der Abdeckrahmen 29 ausgespart ist, so dass die Steckdosen 17a,17b zugänglich verbleiben. Durch den Abdeckrahmen 29 kann eine optisch besonders ansprechende Steckdoseneinheit 3 geschaffen werden, wobei gleichzeitig die Befestigung des Bezuges 7 an der Steckdoseneinheit 3 verdeckt wird und somit gegen Umwelteinflüsse geschützt werden kann.

Die Steckdoseneinheit 3 weist ferner ein Gehäuse 31 auf, das auf der von der Zugangsseite der Steckdose 17a,17b abgewandten Seite der Steckdoseneinheit 3 angeordnet ist. In das Gehäuse 31 sind die einzelnen Steckdosen 17a,17b eingesetzt. Die Anschlüsse der Steckdose 17a,17b werden durch das Gehäuse 31 elektronisch von der Polstereinlage 5 isoliert und gegenüber Umwelteinflüssen geschützt. Dadurch kann beispielsweise verhindert werden, dass Teile der Polstereinlage 5 durch Druckeinwirkung gegen die Anschlüsse der einzelnen Steckdosen 17a,17b gedrückt werden. Die Steckdoseneinheit 3 mit dem Gehäuse 31 und den Steckdosen 17a,17b kann als vormontierte Einheit vorliegen, die lediglich in den Rahmen 15 und die Aussparung 13 eingesetzt werden muss.

Die Polstereinlage 5 kann beispielsweise aus schwerentflammbaren Material, beispielsweise schwerentflammbarem Schaumstoff, bestehen. Die Steckdoseneinheit 3, der Rahmen 15 sowie der Abdeckrahmen 29 sind vorzugsweise aus selbstverlöschendem Kunststoff hergestellt. Durch diese Materialwahl kann die Brandgefahr im Fall eines Defekts der Steckdoseneinheit 3 deutlich reduziert werden.

Die Polstereinlage 5 kann beispielsweise eine Tetraederform aufweisen, so dass das Kissen 1 ebenfalls diese Form besitzt. Auf diese Weise lässt sich das erfindungsgemäße Kissen 1 in besonders vorteilhafter Weise mit einem Polstermöbel kombinieren, indem beispielsweise das Kissen in einer von dem Polstermöbel gebildeten Ecke, wie beispielsweise zwischen Sitzfläche, Rückenlehne und Arme, angeordnet werden kann.

Die Polstereinlage 5 kann beispielsweise zweiteilig ausgebildet sein, wodurch das Kabel 19 in besonders vorteilhafter Weise in dem Kissen 1 geführt werden kann, indem es zwischen die beiden Teile der Polstereinlage 5 gelegt wird.

## Patentansprüche

1. Kissen (1) mit einer Polstereinlage (5) und einem Bezug (7), wobei die Polstereinlage (5) eine Aussparung (13) aufweist, in die eine Steckdosenvorrichtung (2) eingesetzt ist, wobei die Steckdosenvorrichtung (2) aus einer Steckdoseneinheit (3) mit mindestens einer Steckdose (17a,17b) und mindestens einem Kabel (19) besteht, wobei der Bezug (7) eine erste Öffnung (9) aufweist, deren Umfangskanten (11) um die mindestens eine Steckdose (17a,17b) angeordnet und an der Steckdosenvorrichtung (2) befestigt sind, **dadurch gekennzeichnet, dass** der Bezug (7) eine zweite Öffnung (23) aufweist, die eine Durchführungsöffnung (25) für das Kabel (19) bildet.

2. Kissen nach Anspruch 1, **dadurch gekennzeichnet, dass** die Polstereinlage (5) eine Schaumstoffeinlage ist.

3. Kissen nach Anspruch 1 oder 2, **dadurch gekennzeichnet, dass** die Polstereinlage (5) eine zweite Aussparung (21) für das Kabel (19) aufweist.

4. Kissen nach einem der Ansprüche 1 bis 3, **dadurch gekennzeichnet, dass** die Steckdosenvorrichtung (2) einen Rahmen (15) aufweist, an dem die Umfangskanten (11) des Bezugs (7) befestigt sind.

5. Kissen nach einem der Ansprüche 1 bis 4, **dadurch gekennzeichnet, dass** die Steckdoseneinheit (3) ein Gehäuse (31) aufweist, in das Steckdosen (17a,17b) der Steckdoseneinheit (3) eingesetzt sind.

6. Kissen nach einem der Ansprüche 1 bis 5, **dadurch gekennzeichnet, dass** die Polstereinlage (5) zweiteilig ausgebildet ist.

7. Kissen nach einem der Ansprüche 1 bis 6, **gekennzeichnet durch** einen Abdeckrahmen (29), der die Steckdoseneinheit (3) und/oder den Rahmen (15) abdeckt.

8. Kissen nach einem der Ansprüche 1 bis 7, **dadurch gekennzeichnet, dass** die zweite Öffnung (23) eine an die Polstereinlage (5) angepasste Größe aufweist, wobei die zweite Öffnung (23) über eine Verschließeinrichtung (27) bis zum Verbleib der Durchführungsöffnung (25) verschließbar ist.

9. Kissen nach einem der Ansprüche 4 bis 8, **dadurch gekennzeichnet, dass** die Umfangskanten (11) des Bezugs (7) an dem Rahmen (15) verklebt oder vertackert sind.

10. Kissen nach einem der Ansprüche 1 bis 9, **dadurch gekennzeichnet, dass** die Steckdoseneinheit (3) Strom- und/oder Datensteckdosen (17a,17b) aufweist.

11. Kissen nach einem der Ansprüche 1 bis 10, **dadurch gekennzeichnet, dass** die Polstereinlage (5) eine Tetraederform besitzt.

12. Kissen nach einem der Ansprüche 1 bis 11, **dadurch gekennzeichnet, dass** die Steckdoseneinheit (3) und/oder das Gehäuse (31) zumindest teilweise aus einem selbstverlöschenden Kunststoff bestehen.

13. Kissen nach einem der Ansprüche 1 bis 12, **dadurch gekennzeichnet, dass** die Polstereinlage (5) aus einem schwer entflammbaren Material besteht.

## Claims

1. Cushion (1) with a padding (5) and a cover (7), wherein the padding (5) has a recess (13) into which a socket device (2) is inserted, wherein the socket device (2) is formed by a socket unit (3) comprising at least one socket (17a, 17b) and at least one cable (19), wherein the cover (7) has a first opening (9) whose peripheral edges (11) are arranged around the at least one socket (17a, 17b) and are fastened at the socket device (2), **characterized in that** the cover (7) has a second opening (23) forming a passage opening (25) for the cable (19).

2. Cushion of claim 1, **characterized in that** the padding (5) is a foamed material insert.

3. Cushion of claim 1 or 2, **characterized in that** the padding (5) has a second recess (21) for the cable (19).

4. Cushion of one of claims 1 to 3, **characterized in that** the socket device (2) comprises a frame (15) to which the peripheral edges (11) of the cover (7) are fastened.

5. Cushion of one of claims 1 to 4, **characterized in that** the socket unit (3) comprises a housing (31) into which sockets (17a, 17b) of the socket unit (3) are inserted.

6. Cushion of one of claims 1 to 5, **characterized in that** the padding (5) is embodied as two parts.

7. Cushion of one of claims 1 to 6, **characterized by** a cover frame (29) that covers the socket unit (3) and/or the frame (15).

8. Cushion of one of claims 1 to 7, **characterized in that** the second opening (23) has a size adapted to the padding (5), wherein the second opening (23) is adapted to be closed by means of a closing device (27) up to the position of the passage opening (25).

9. Cushion of one of claims 4 to 8, **characterized in that** the peripheral edges (11) of the cover (7) are glued or stapled to the frame (15).

10. Cushion of one of claims 1 to 9, **characterized in that** the socket unit (3) includes power and/or data sockets (17a, 17b).

11. Cushion of one of claims 1 to 10, **characterized in that** the padding (5) is of tetrahedral shape.

12. Cushion of one of claims 1 to 11, **characterized in that** the socket unit (3) and/or the housing (31) are made at least in part of a self-extinguishing material.

13. Cushion of one of claims 1 to 12, **characterized in that** the padding (5) is made of a flame-resistant material.

## Revendications

1. Coussin (1) comprenant une pièce de rembourrage (5) et un revêtement (7), la pièce de rembourrage (5) présentant un évidement (13) dans lequel est introduit un dispositif de prises (2), le dispositif de prises (2) se composant d'une unité de prises (3) comprenant au moins une prise (17a, 17b) et au moins un câble (19), le revêtement (7) présentant une première ouverture (9) dont les bords périphériques (11) sont disposées autour de l'au moins une prise (17a, 17b) et sont fixées sur le dispositif de prises (2), **caractérisé en ce que** le revêtement (7) présente une deuxième ouverture (23) qui forme une ouverture de passage (25) pour le câble (19).

2. Coussin selon la revendication 1, **caractérisé en ce que** la pièce de rembourrage (5) est une pièce en mousse.

3. Coussin selon la revendication 1 ou 2, **caractérisé en ce que** la pièce de rembourrage (5) présente un deuxième évidement (21) pour le câble (19).

4. Coussin selon l'une des revendications 1 à 3, **caractérisé en ce que** le dispositif de prises (2) présente un cadre (15) sur lequel sont fixés les bords périphériques (11) du revêtement (7).

5. Coussin selon l'une des revendications 1 à 4, **caractérisé en ce que** l'unité de prises (3) présente un boîtier (31) dans lequel sont introduites des prises (17a, 17b) de l'unité de prises (3).

6. Coussin selon l'une des revendications 1 à 5, **caractérisé en ce que** la pièce de rembourrage (5) est constituée en deux parties.

7. Coussin selon l'une des revendications 1 à 6, **caractérisé par** un cadre de recouvrement (29) qui recouvre l'unité de prises (3) et/ou le cadre (15).

8. Coussin selon l'une des revendications 1 à 7, **caractérisé en ce que** la deuxième ouverture (23) présente une grandeur adaptée à la pièce de rembourrage (5), la deuxième ouverture (23) pouvant être fermée par le biais d'un dispositif de fermeture (27) jusqu'à l'emplacement de l'ouverture de passage (25).

9. Coussin selon l'une des revendications 4 à 8, **caractérisé en ce que** les bords périphériques (11) du revêtement (7) sont collées ou agrafées sur le cadre (15).

10. Coussin selon l'une des revendications 1 à 9, **caractérisé en ce que** l'unité de prises (3) présente des prises de courant et/ou de données (17a, 17b).

11. Coussin selon l'une des revendications 1 à 10, **caractérisé en ce que** la pièce de rembourrage (5) possède une forme de tétraèdre.

12. Coussin selon l'une des revendications 1 à 11, **caractérisé en ce que** l'unité de prises de courant (3) et/ou le boîtier (31) sont composés au moins partiellement d'une matière plastique auto-extinguible.

13. Coussin selon l'une des revendications 1 à 12, **caractérisé en ce que** la pièce de rembourrage (5) est composée d'un matériau difficilement inflammable.
